# FASCICULE DE BREVET EUROPEEN

(11) **EP 0 547 949 B1**
(45) Date de publication et mention de la délivrance du brevet: **26.02.1997**
(21) Numéro de dépôt: 92403378.0
(22) Date de dépôt: 11.12.1992
(51) Int. Cl.: G02B 27/28

(54) **Séparateur de polarisation optique et application à un système de visualisation**
Optischer Polarisationsstrahlenteiler und seine Verwendung in einem Abbildungssystem
Optical polarization beam splitter and its application for a display system

(30) Priorité: 17.12.1991 FR 9115641
(43) Date de publication de la demande: 23.06.1993
(73) Titulaire: THOMSON-CSF, 75008 Paris (FR)
(72) Inventeur: Huignard, Jean-Pierre, THOMSON-CSF, F-92402 Courbevoie Cedex (FR); Loiseaux, Brigitte, THOMSON-CSF, F-92402 Courbevoie Cedex (FR); Joubert, Cécile, THOMSON-CSF, F-92402 Courbevoie Cedex (FR)
(74) Mandataire: Guérin, Michel

(56) Documents cités:
- EP-A- 0 389 240
- EP-A- 0 422 661
- EP-A- 0 431 894
- EP-A- 0 457 605
- JP-A-62 249 107
- JP-A-63 168 622

## Description

L'invention concerne un séparateur de polarisations optique et son application à un système de visualisation.

Plus particulièrement, l'invention concerne un composant optique de faible épaisseur et de grande dimension dont la fonction est de polariser une onde incidence issue d'une source de lumière cohérente ou incohérente ( lampe halogène, lampe à arc par exemple, ... ) du type déjà divulgué dans le document EP-A-0 422 661. Le composant obtenu s'intègre tout particulièrement dans une configuration optique de système de projection vidéo et l'invention concerne donc également un système de visualisation notamment à cristal liquide.

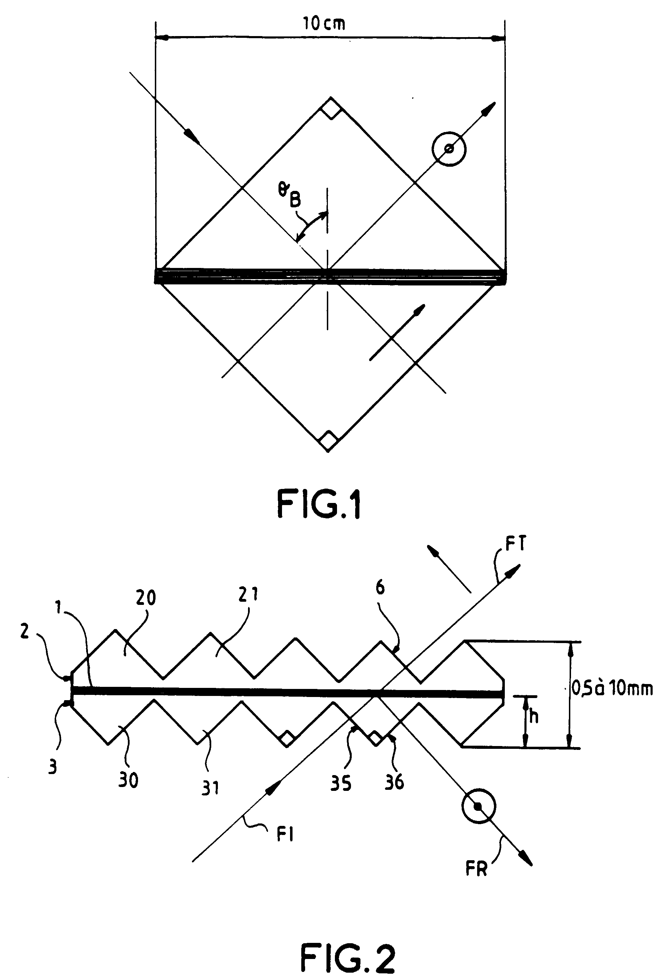

Un miroir de Bragg relu selon les conditions de la figure 1 constitue un polariseur pour l'onde incidente : l'angle de Bragg θ = 45° à la longueur d'onde λ étant également l'incidence de Brewster de l'interface n ; n + Δ n. L'onde réfléchie par ce composant est polarisée perpendiculairement, alors que l'onde transmise est située dans le plan d'incidence. Dans sa forme classique, le composant est constitué de deux prismes à 45° d'indice n accolés au composant holographique enregistré par des moyens annexes sur un matériau à variation d'indice photoinduite. Ce "prisme séparateur de polarisation" réalise une fonction optique importante dans un projecteur vidéo intégrant des matrices actives à cristal liquide. Des architectures optiques originales exploitant les propriétés de polarisation et de diffraction sélective en longueur d'onde de ces composants ont fait l'objet de la Demande de Brevet français n° 90 14620. Dans certaines configurations optiques le cube séparateur de polarisation peut être de dimension équivalente à l'écran LCD (10 x 10 cm² typiquement) ce qui conduit à la réalisation d'un composant en verre ou plastique de grande dimension, donc lourd et encombrant.

L'invention permet de réaliser un séparateur de polarisations de faible épaisseur, donc peu lourd et peu encombrant.

L'invention concerne donc le séparateur de polarisations défini dans la revendication 1.

L'invention concerne également le système de visualisation défini dans la revendication 6 et appliquant le séparateur.

Les différents objets et caractéristiques de l'invention apparaîtront plus clairement dans la description qui va suivre et dans les figures annexées qui représentent :
- la figure 1, un séparateur de polarisations connu dans la technique et décrit précédemment ;
- la figure 2, un exemple de réalisation d'un séparateur de polarisations selon l'invention ;
- la figure 3, un exemple de réalisation d'un dispositif de visualisation selon l'invention ;
- les figures 4 à 7, une variante de réalisation du dispositif de visualisation selon l'invention.

En se reportant à la figure 2, on va tout d'abord décrire un exemple de réalisation d'un séparateur de polarisations selon l'invention.

Ce séparateur de polarisations comporte :
- deux réseaux 2 et 3 de microprismes type "Fresnel" dont l'angle au sommet vaut de préférence 90° pour obtenir une efficacité maximale du composant ;
- un élément séparateur de polarisation 1 enserré entre les deux réseaux de microprismes 2 et 3. Cet élément séparateur 1 est un miroir de Bragg enregistré sur matériau photopolymère.

Les prismes 20, 21, ... du réseau 2 et les prismes 30, 31, ... du réseau 3 sont en un matériau dont l'indice est adapté à celui de l'élément séparateur 1 de façon que la différence d'indices entre les prismes et l'élément séparateur 1 soit faible, voire nulle. Par exemple, l'élément séparateur 1 peut être en matériau polymère de même que les prismes

Selon un mode de réalisation préféré, les réseaux de microprismes 2 et 3 sont réalisés sous la forme de plaques comportant des surfaces cannelées en forme de prismes.

Un faisceau incident FI non polarisé dont la direction fait un angle, dit angle de Brewster avec la normale au plan des strates de l'élément 1, voit sa lumière polarisée selon une direction, contenue dans le plan d'incidence, transmise selon une direction FT colinéaire avec la direction d'incidence. La lumière polarisée selon la direction perpendiculaire au plan d'incidence est réfléchie selon une direction FR perpendiculaire à la direction d'incidence.

Selon un mode préféré de réalisation, le faisceau FI faisant un angle de 45° avec le plan des strates de l'élément 1, les faces des prismes, telles que 35, sont perpendiculaires à la direction du faisceau incident. De même, les faces de sortie du faisceau réfléchi, telles que 36, sont perpendiculaires à la direction FR. Les faces de sortie du faisceau transmis, telles que 26, sont perpendiculaires à la direction FT.

Selon ce mode de réalisation, les directions FI, FT, FR sont inclinées à 45° par rapport aux faces principales de l'élément 1. Chaque prisme 20, 21, 30, 31, ... est alors un prisme dont l'angle au sommet est 90° et dont les faces sont inclinées à 45° par rapport aux faces principales de l'élément 1. Le faisceau FI est alors transmis et réfléchi sans déformation selon les faisceaux FT et FR. Par contre si on veut faire subir au faisceau une anamorphose, le réseau de strates n'est pas enregistré parallèlement au plan de l'élément 1. Le faisceau FI étant toujours incliné de 45° par rapport au plan des strates et étant toujours perpendiculaire à la face 35, les faces 35 et 36 ne sont plus à 45° par rapport à l'élément 1.

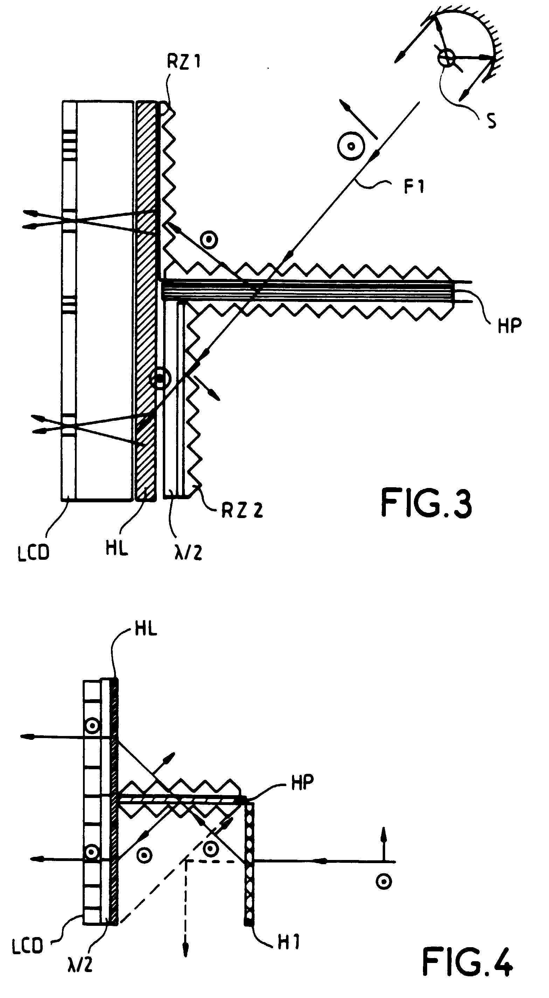

En se reportant aux figures 3 et 4, on va maintenant décrire une application du séparateur de l'invention à un dispositif de visualisation.

Le dispositif de la figure 3 est une application aux dispositifs précédents dans laquelle la lumière réfléchie par le dispositif séparateur de polarisations HP éclaire une partie (la moitié par exemple) d'un dispositif de focalisation HL et d'un écran LCD.

La lumière qui n'est pas réfléchie (polarisation parallèle au plan d'incidence) et qui est transmise par le dispositif de polarisation HP éclaire l'autre partie du dispositif de focalisation HL et l'autre partie de l'écran. Toute la lumière de la source peut être donc utilisée.

Les réseaux RZ1 et RZ2 accolés au dispositif de focalisation HL permettent d'obtenir une incidence normale sur les faces d'entrées des réseaux RZ1 et RZ2. Cependant, il est également possible de ne pas prévoir de réseaux RZ1, RZ2. Le dispositif de focalisation permet de défléchir et de focaliser la lumière vers les éléments image de l'écran LCD.

Il est possible de prévoir une lame demi-onde λ /2 qui fait tourner la polarisation de la lumière éclairant l'une des parties de l'écran. Sur la figure 3, cette lame demi-onde est placée sur le trajet du faisceau transmis par le dispositif HP. L'écran LCD est alors commandé électriquement de façon uniforme sur toute sa surface. Avantageusement, la lame demi-onde peut être une cellule à cristal liquide passive fonctionnant dans le mode guide d'onde (chromatique). Cette lame demi-onde pourrait être placée sur le trajet du faisceau réfléchi au lieu du faisceau transmis par le dispositif HP avant ou après l'écran LCD. Egalement, de préférence, cette lame demi-onde pourrait être placée de façon à être perpendiculaire au faisceau.

On peut également ne pas prévoir la lame demi-onde. Dans ce cas, les deux parties de l'écran sont donc éclairées par des faisceaux de lumière de polarisations orthogonales. On peut alors commander les deux parties de l'écran de façon inversée.

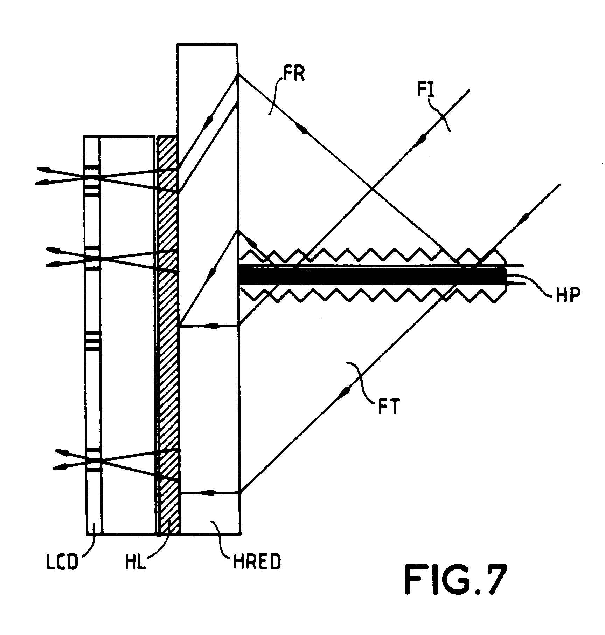

Selon une variante de réalisation représentée en figure 7, on prévoit un dispositif de déviation HRED des faisceaux transmis au dispositif de focalisation HL.

En effet, pour éviter d'avoir sur l'écran LCD, dans la partie médiane de l'écran, une zone non éclairée, le dispositif HRED permet de dévier l'un, l'autre ou les deux faisceaux FT et FR de façon à les rapprocher. A titre d'exemple, sur la figure 7, le faisceau FR est défléchi pour l'accoler au faisceau FT. Les faisceaux FT et FR sont ensuite transmis au dispositif de focalisation HL qui les focalise sur les différents éléments image de l'écran LCD. Selon l'invention, le dispositif HRED est réalisé sous la forme d'un dispositif holographique.

La figure 4 représente une variante de réalisation du système de la figure 3 permettant d'obtenir des trajets égaux en tous points à partir de la source S jusqu'à un écran LCD. Ce dispositif comporte, bien que cela ne soit pas obligatoire, le dispositif holographique de focalisation HL accolé à l'écran LCD. Le dispositif holographique de séparation de polarisations HP est situé selon un plan médian à l'écran LCD et au dispositif HL. Le faisceau d'entrée est tel que son angle d'incidence sur le dispositif HP est de 45°. Pour obtenir cet angle d'incidence, un dispositif holographique H1 enregistré pour dévier le faisceau d'entrée de façon à le retransmettre sous une incidence sensiblement de 45° au dispositif HP. De préférence, le faisceau d'entrée est perpendiculaire au dispositif H1.

En fonctionnement à plusieurs longueurs d'ondes (fonctionnement trichrome), le dispositif holographique H1 défléchi le faisceau d'entrée ayant une longueur d'onde située dans une bande étroite, le vert par exemple. Les faisceaux possédant d'autres longueurs d'ondes ne sont pas déviés (faisceaux FB et FR). Par contre, une lame dichroïque LBR réfléchit ces faisceaux FB et FR vers d'autres dispositifs de visualisation placés en série (mais non représentés sur la figure).

Dans l'exemple de réalisation de la figure 4, la lame dichroïque LBR est en aval du dispositif H1, mais elle pourrait également être en amont du dispositif H1.

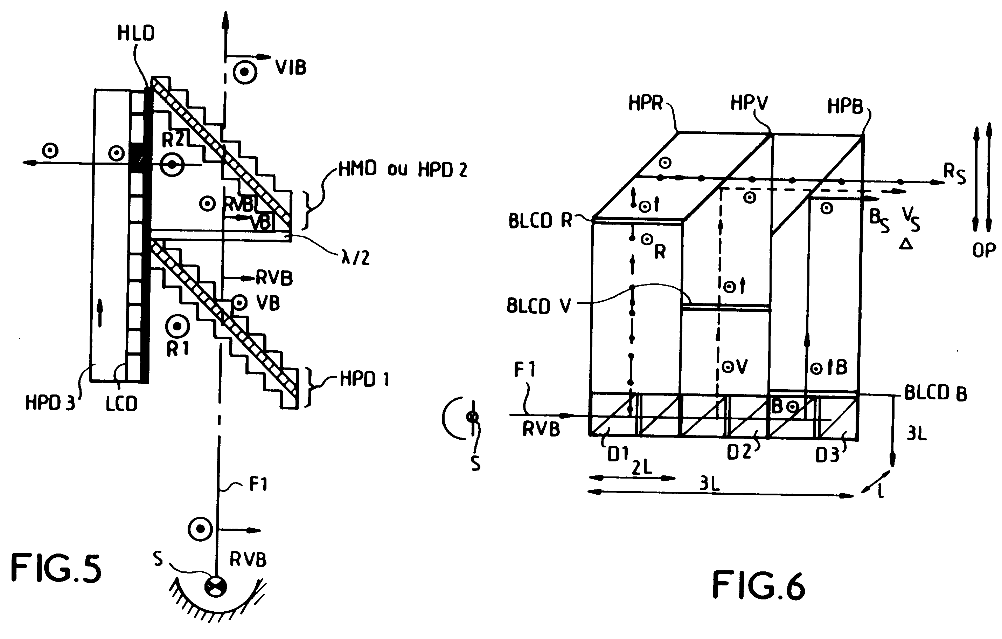

La figure 5 représente une variante de réalisation du dispositif de l'invention. Ce dispositif comporte un premier dispositif de séparation de polarisations HPD1 disposé incliné (à 45° par exemple) par rapport à l'écran LCD et permettant d'éclairer la moitié de l'écran LCD. Il reçoit un faisceau incident RVB selon une direction parallèle à l'écran LCD. Il réfléchit vers l'écran LCD l'une des polarisations R1 du faisceau incident à une longueur d'onde déterminée (longueur d'onde correspondant au rouge par exemple). Il retransmet sans déflexion l'autre polarisation R2 du faisceau de la même longueur d'onde (rouge) ainsi que la lumière à toutes les autres longueurs d'ondes (notamment celles correspondant au vert et au bleu).

Un deuxième dispositif de séparation de polarisations HPD2 fonctionnant à la même longueur d'onde que HPD1 (le rouge selon l'exemple pris) réfléchi le faisceau R2 vers l'écran LCD. Ce dispositif de séparation peut également être un miroir holographique fonctionnant à la longueur d'onde à réfléchir (le rouge ) :

L'écran LCD reçoit les faisceaux R1 et R2 par l'intermédiaire d'un dispositif de focalisation HL qui focalise comme cela a été décrit précédemment la lumière sur les différents éléments images de l'écran LCD. Cependant, il est également possible de ne pas prévoir de dispositif de focalisation HL. En sortie de l'écran LCD un troisième dispositif de séparation de polarisations HPD3 laisse passer la lumière d'une certaine polarisation et ne retransmet pas la lumière de polarisation perpendiculaire et cela en fonction de l'image affichée par l'écran LCD.

De plus, les deux parties de l'écran recevant les deux faisceaux R1 et R2 peuvent être commandés en inverse. Ou bien, il est possible de prévoir une lame demi-onde λ /2 qui fait tourner de 90° la polarisation de l'un de ces faisceaux. Par exemple, comme cela est représenté sur la figure 5, la lame λ /2 est placée entre le premier dispositif de séparation de polarisations HPD et le deuxième dispositif de séparation de polarisations HPD2.

Le dispositif de la figure 5 fonctionne à une seule longueur d'onde ou plus précisément à une gamme de longueurs d'ondes relativement étroite. La lumière à d'autres longueurs d'ondes n'est pas déviée et ressort selon le faisceau VB.

Pour traiter d'autres longueurs d'ondes l'invention prévoit de disposer d'autres dispositifs tels que celui de la figure 5 selon une disposition représentée en figure 6. Sur cette figure 6, on a aligné deux autres dispositifs sur la direction du faisceau VB. Le premier dispositif est conçu pour traiter une gamme de longueurs d'ondes correspondant par exemple au vert. Il ne dévie pas la lumière possédant une longueur d'onde appartenant à une troisième gamme, le bleu par exemple.

Les trois dispositifs D1, D2, D3 traitent ainsi trois gammes de longueurs d'ondes différentes c'est-à-dire des gammes correspondants respectivement au rouge, au vert et au bleu.

Les trois faisceaux issus des trois dispositifs D1, D2, D3 sont superposés à l'aide de trois miroirs HPR, HPV, HPB recevant en parallèle les trois faisceaux traités et disposés en série sur la direction des faisceaux réfléchis de façon à rendre colinéaires les trois faisceaux réfléchis Rₛ, Vₛ, Bₛ. Ces trois faisceaux sont transmis à une optique de sortie OP.

L'invention présente les avantages suivants :
- utilisation d'un réseau de microprismes de faible épaisseur réalisé par moulage plastique, par exemple épaisseur de 5 à 10 mm au moins ;
- miroir de Bragg enregistré optiquement sur film photopolymère adhéré aux réseaux de microprismes ;
- structure de faible poids et compatible avec la réalisation de fonctions " cube séparateur de polarisation " de très grandes dimensions 15 x 15 cm par exemple.

## Revendications

1. Séparateur de polarisations optique comprenant un élément séparateur de polarisations enserré entre deux lames (2, 3) dont les faces opposées à l'élément séparateur de polarisations ont une forme d'un réseau de prismes (20, 21 ; 30, 31), caractérisé en ce que l'élément séparateur de polarisations comprend un miroir de Bragg (1) enregistré dans un matériau photopolymère.

2. Séparateur de polarisations optique selon la revendication 1, caractérisé en ce qu'il comporte une source émettant un faisceau lumineux sur une face d'incidence du miroir de Bragg selon un angle de sensiblement 45° par rapport à la normale à cette face, le miroir de Bragg transmettant une première polarisation (F2) du faisceau incident selon une première direction colinéaire avec la direction du faisceau incident et réfléchissant une deuxième polarisation (F3) du faisceau incident selon une deuxième direction faisant un angle droit dans le milieu de l'élément séparateur de polarisations avec la première direction,
- le réseau de prismes de la lame (3) disposée sur la face d'incidence du réseau de Bragg présentant une face (35) perpendiculaire à la direction du faisceau d'incidence et une face (36) perpendiculaire à la deuxième direction, et
- le réseau de prismes de la lame (2) disposée sur la face du réseau de Bragg opposée à la face d'incidence présentant une face (6) perpendiculaire à la première direction.

3. Séparateur selon la revendication 1, caractérisé en ce que chaque prisme est en un matériau similaire à celui de l'élément séparateur de polarisations (1).

4. Séparateur selon la revendication 1, caractérisé en ce que le réseau de Bragg est un réseau holographique.

5. Séparateur selon la revendication 1, caractérisé en ce que les réseaux de prismes sont réalisés sous forme de plaques présentant des échelettes.

6. Système de visualisation comprenant le séparateur selon l'une quelconque des revendications précédentes et au moins un dispositif de visualisation électrooptique commandable agissant, selon son état de commande, sur l'une ou l'autre des polarisations, le séparateur recevant de la lumière non polarisée, retransmettant la lumière d'une polarisation sur une partie du dispositif de visualisation et réfléchissant la lumière d'une autre polarisation sur une autre partie du dispositif de visualisation.

7. Système de visualisation selon la revendication 6, caractérisé en ce que le séparateur de polarisation est éclairé par une source de lumière (S) non polarisée, transmet selon un premier trajet la lumière polarisée selon une première direction de polarisation et réfléchit selon un deuxième trajet la lumière polarisée selon une deuxième direction de polarisation orthogonale à la première direction, un dispositif de réflexion étant situé sur l'un des deux trajets et réfléchissant la lumière parallèlement à l'autre trajet de façon à rendre parallèles les deux faisceaux des deux polarisations.

8. Système de visualisation selon la revendication 7, caractérisé en ce que le séparateur de polarisations est disposé perpendiculairement au plan du dispositif de visualisation selon une ligne séparant en deux parties égales le plan du dispositif de visualisation, chaque partie de ce plan possédant un réseau de prismes possédant chacun une face qui est perpendiculaire à la direction du trajet de la lumière provenant du séparateur de polarisation.

9. Système de visualisation selon la revendication 7, caractérisé en ce que le séparateur de polarisations est disposé perpendiculairement au plan du dispositif de visualisation selon une ligne séparant en deux parties égales le plan du dispositif de visualisation, chaque partie de ce plan possédant un dispositif de focalisation (HL) recevant chacun la lumière provenant du séparateur de polarisations et la focalisant dans le plan du dispositif de visualisation.

10. Système de visualisation selon la revendication 7, caractérisé en ce qu'il comporte plusieurs séparateurs de polarisations (HPD1, HPD2) inclinés à 45° par rapport au plan de l'écran de visualisation, chaque séparateur de polarisation réfléchissant vers l'écran de visualisation une polarisation à une longueur d'onde et retransmettant vers un autre séparateur l'autre polarisation à cette longueur d'onde ainsi que les autres longueurs d'ondes.

11. Système selon la revendication 9, caractérisé en ce qu'il comporte un dispositif de déviation holographique (HRED) disposé entre le séparateur de polarisations et le dispositif de focalisation (HL) et permettant de dévier l'un, l'autre ou les deux faisceaux (FT, FR) transmis par le séparateur pour les rapprocher.

12. Système selon l'une des revendications 8, 9 ou 10, caractérisé en ce que le dispositif de visualisation est un écran à cristal liquide et qu'il comporte un dispositif de focalisation permettant de focaliser la lumière provenant du séparateur de polarisations dans les différents éléments images de l'écran à cristal liquide.

## Patentansprüche

1. Optischer Polarisationsteiler, mit einem Polarisationsteilerelement, das zwischen zwei Plättchen (2, 3) eingeklemmt ist, deren Flächen, die dem Polarisationsteilerelement zugewandt sind, die Form eines Prismengitters (20, 21, 30, 31) besitzen, dadurch gekennzeichnet, daß das Polarisationsteilerelement einen Bragg-Spiegel (1) enthält, der in ein Photopolymer-Material eingetragen ist.

2. Optischer Polarisationsteiler nach Anspruch 1, dadurch gekennzeichnet, daß er eine Quelle enthält, die ein Lichtstrahlenbündel auf eine Auftrefffläche des Bragg-Spiegels in einem Winkel aussendet, der in bezug auf die Normale dieser Fläche im wesentlichen 45° beträgt, wobei der Bragg-Spiegel einen ersten Polarisationsstrahl (F2) des auftreffenden Strahlenbündels in einer ersten Richtung durchläßt, die zur Richtung des auftreffenden Strahlenbündels kolinear ist, und einen zweiten Polarisationstrahl (F3) des auftreffenden Strahlenbündels in einer zweiten Richtung reflektiert, die in der Mitte des Polarisationsteilerelements mit der ersten Richtung einen rechten Winkel bildet,
- wobei das Prismengitter des Plättchens (3), das auf der Auftrefffläche des Bragg-Gitters angeordnet ist, eine zur Richtung des auftreffenden Strahlenbündels senkrechte Fläche (35) und eine zur zweiten Richtung senkrechte Fläche (36) aufweist und
- wobei das Prismengitter des Plättchens (2), das auf der der Auftrefffläche gegenüberliegenden Fläche des Bragg-Gitters angeordnet ist, eine zur ersten Richtung senkrechte Fläche (6) aufweist.

3. Teiler nach Anspruch 1, dadurch gekennzeichnet, daß jedes Prisma aus einem ähnlichen Material wie dasjenige des Polarisationsteilerelements (1) ist.

4. Teiler nach Anspruch 1, dadurch gekennzeichnet, daß das Bragg-Gitter ein Holographie-Gitter ist.

5. Teiler nach Anspruch 1, dadurch gekennzeichnet, daß die Prismengitter in Form von Platten verwirklicht sind, die kleine Leitern aufweisen.

6. Anzeigesystem, das den Teiler nach irgendeinem der vorangehenden Ansprüche sowie wenigstens eine steuerbare elektrooptische Anzeigevorrichtung enthält, welche je nach Steuerzustand auf die eine oder die andere der Polarisationen einwirkt, wobei der Teiler das nicht polarisierte Licht empfängt, das Licht einer Polarisation auf einen Teil der Anzeigevorrichtung durchläßt und das Licht einer anderen Polarisation auf einen anderen Teil der Anzeigevorrichtung reflektiert.

7. Anzeigesystem nach Anspruch 6, dadurch gekennzeichnet, daß der Polarisationsteiler durch eine nicht polarisierte Lichtquelle (S) beleuchtet wird, das in einer ersten Polarisationsrichtung polarisierte Licht auf einer ersten Bahn durchläßt und das Licht, das in einer zweiten, zur ersten Richtung senkrechten Polarisationsrichtung polarisiert ist, auf einer zweiten Bahn reflektiert, wobei sich in einer der zwei Bahnen eine Reflexionsvorrichtung befindet, die das Licht parallel zur anderen Bahn in der Weise reflektiert, daß sie die zwei Strahlenbündel der zwei Polarisationen parallel macht.

8. Anzeigesystem nach Anspruch 7, dadurch gekennzeichnet, daß der Polarisationsteiler senkrecht zur Ebene der Anzeigevorrichtung auf einer Linie angeordnet ist, die die Ebene der Anzeigevorrichtung in zwei gleiche Teile trennt, wobei jeder Teil dieser Ebene ein Prismengitter besitzt, das jeweils eine Fläche besitzt, die zur Richtung der Bahn des Lichts, das vom Polarisationsteiler stammt, senkrecht ist.

9. Anzeigesystem nach Anspruch 7, dadurch gekennzeichnet, daß der Polarisationsteiler senkrecht zur Ebene der Anzeigevorrichtung auf einer Linie angeordnet ist, die die Ebene der Anzeigevorrichtung in zwei gleiche Teile trennt, wobei jeder Teil dieser Ebene eine Fokussierungsvorrichtung (HL) besitzt, die jeweils das vom Polarisationsteiler stammende Licht empfängt und es auf eine Ebene der Anzeigevorrichtung fokussiert.

10. Anzeigesystem nach Anspruch 7, dadurch gekennzeichnet, daß es mehrere Polarisationsteiler (HPD1, HPD2) enthält, die in bezug auf die Ebene des Anzeigebildschirms um 45° geneigt sind, wobei jeder Polarisationsteiler eine Polarisation mit einer Wellenlänge zum Bildschirm reflektiert und die andere Polarisation derselben Wellenlänge sowie die anderen Wellenlängen zu einem anderen Teiler durchläßt.

11. System nach Anspruch 9, dadurch gekennzeichnet, daß es eine Vorrichtung für holographische Ablenkung (HRED) enthält, die zwischen dem Polarisationsteiler und der Fokussierungsvorrichtung (HL) angeordnet ist und ermöglicht, das eine, das andere oder beide Strahlenbündel (FT, FR), die vom Teiler durchgelassen werden, abzulenken, um sie einzustellen.

12. System nach einem der Ansprüche 8, 9 oder 10, dadurch gekennzeichnet, daß die Anzeigevorrichtung ein Flüssigkristallbildschirm ist und daß es eine Fokussierungsvorrichtung enthält, die die Fokussierung des vom Polarisationsteiler stammenden Lichts auf verschiedene Bildelemente des Flüssigkristallbildschirms ermöglicht.

## Claims

1. Optical polarizing beam splitter comprising a polarizing beam splitter element sandwiched between two plates (2, 3) whose faces opposite the polarizing beam splitter element have the shape. of a grating of prisms (20, 21, 30, 31), characterized in that the polarizing beam splitter element comprises a Bragg mirror (1) recorded in a photopolymer material.

2. Optical polarizing beam splitter according to Claim 1, characterized in that it includes a source emitting a light beam onto an incident face of the Bragg mirror at an angle of substantially 45° with respect to the normal to this face, the Bragg mirror transmitting a first polarization (F2) of the incident beam along a first direction collinear with the direction of the incident beam and reflecting a second polarization (F3) of the incident beam along a second direction making a right angle in the medium of the polarizing beam splitter element with the first direction,
- the grating of prisms of the plate (3) located on the incident face of the Bragg grating having a face (35) perpendicular to the direction of the incident beam and a face (36) perpendicular to the second direction, and
- the grating of prisms of the plate (2) located on the face of the Bragg grating opposite the incident face having a face (6) perpendicular to the first direction.

3. Beam splitter according to Claim 1, characterized in that each prism is made of a material similar to that of the polarizing beam splitter element (1).

4. Beam splitter according to Claim 1, characterized in that the Bragg grating is a holographic grating.

5. Beam splitter according to Claim 1, characterized in that the gratings of prisms are produced in the form of plates having steps.

6. Display system comprising the beam splitter according to any one of the preceding claims and at least one controllable electrooptical display device acting, depending on its control state, on one or other of the polarizations, the beam splitter receiving the unpolarized light, retransmitting the light of one polarization onto part of the display device and reflecting the light of another polarization onto another part of the display device.

7. Display system according to Claim 6, characterized in that the polarizing beam splitter is illuminated by an unpolarized light source (S), transmits, along a first path, the light polarized in a first polarization direction and reflects, along a second path, the light polarized in a second polarization direction orthogonal to the first direction, a reflection device lying in one of the two paths and reflecting the light parallel to the other path so as to make the two beams of the two polarizations parallel.

8. Display system according to Claim 7, characterized in that the polarizing beam splitter lies perpendicular to the plane of the display device along a line separating the plane of the display device into two equal parts, each part of this plane possessing a grating of prisms each possessing a face which is perpendicular to the direction of the path of the light coming from the polarizing beam splitter.

9. Display system according to Claim 7, characterized in that the polarizing beam splitter lies perpendicular to the plane of the display device along a line separating the plane of the display device into two equal parts, each part of this plane possessing a focusing device (HL), each receiving the light coming from the polarizing beam splitter and focusing it in the plane of the display device.

10. Display system according to Claim 7, characterized in that it includes several polarizing beam splitters (HPD1, HPD2) inclined at 45° with respect to the plane of the display screen, each polarizing beam splitter reflecting, towards the display screen, a polarization having one wavelength and retransmitting, towards another beam splitter, the other polarization having this wavelength as well as the other wavelengths.

11. System according to Claim 9, characterized in that it includes a holographic deflecting device (HRED) lying between the polarizing beam splitter and the focusing device (HL) and making it possible to deflect one or other or both of the two beams (FT, FR) transmitted by the beam splitter in order to bring them together.

12. System according to one of Claims 8, 9 or 10, characterized in that the display device is a liquid-crystal screen and in that it includes a focusing device making it possible to focus the light coming from the polarizing beam splitter into the various picture elements of the liquid-crystal screen.
